# EUROPEAN PATENT APPLICATION

(11) **EP 4 704 215 A1**
(43) Date of publication of application: **04.03.2026**
(21) Application number: 23935043.2
(22) Date of filing: 22.11.2023
(51) Int. Cl.: H01M 10/44, H01M 10/48, H02J 7/00, H01M 50/209

(54) **BATTERY ASSEMBLY, BATTERY, ELECTRIC APPARATUS, AND CONTROL METHOD FOR BATTERY ASSEMBLY**

(30) Priority: 28.04.2023 CN 202310485971
(71) Applicant: Contemporary Amperex Technology Co., Limited, Ningde, Fujian 352100 (CN)
(72) Inventor: LI, Quanguo, Ningde, Fujian 352100 (CN)
(74) Representative: Gong, Jinping
(86) International application number: PCT/CN2023/133273
(87) International publication number: WO 2024/221875

(57) **Abstract**

A battery assembly (30) and a control method thereof, a battery (100), and an electric apparatus are provided, where the battery assembly (30) includes: M battery cells (20), the M battery cells (20) being sequentially stacked along a first direction, where M is an integer greater than 1; and a volume of each battery cell (20) is positively correlated with a remaining charge of the battery cell, so that when a charge of at least one battery cell (20) among the M battery cells (20) changes, a total volume change of the M battery cells (20) is maintained within a first preset range.

## Description

### CROSS-REFERENCE TO RELATED APPLICATIONS

The present application is based on and claims priority to Chinese Patent Application No. 202310485971.9, filed on April 28, 2023, which is incorporated herein by reference in its entirety.

### TECHNICAL FIELD

The present application relates to the field of battery technology, and specifically, to a battery assembly, a battery, an electric apparatus, and a control method of a battery assembly.

### BACKGROUND

In related art, a battery includes a plurality of battery cells, and during charging and discharging, the volume of each battery cell changes with the variation in remaining charge. When battery cells are arranged within the battery, if insufficient expansion space is reserved for the battery cells, the expansion of multiple battery cells may cause mutual compression, and the expansion of battery cells may exert pressure on end plates, easily leading to hazardous situations and resulting in low safety of battery use. If a large amount of expansion space is reserved for the battery cells, the energy density of the battery may be low, affecting the capacity of the battery.

### SUMMARY

The present application aims to at least partially address one of the technical problems in the prior art. To this end, the present application provides a battery assembly capable of improving the safety of battery use and facilitating an increase in the energy density and capacity of the battery.

According to a first aspect, an embodiment of the present application provides a battery assembly, where the battery assembly includes: M battery cells, the M battery cells being sequentially stacked along a first direction, where M is an integer greater than 1; where a volume of each battery cell is positively correlated with a remaining charge of the battery cell, so that when a charge of at least one of the M battery cells changes, a total volume change of the M battery cells is maintained within a first preset range.

In the above technical solution, by sequentially stacking the M battery cells, when the charge of at least one of the M battery cells changes, the charge of at least one of the remaining battery cells may change accordingly or remain unchanged, so that the total volume change of the M battery cells is maintained within the first preset range, which can reduce the probability of hazardous situations, improve the safety of battery use, and reduce the expansion space required to be reserved for the battery, thereby facilitating an increase in the energy density and capacity of the battery.

In some embodiments, the M battery cells are stacked to form N battery units, where N is an integer greater than 1, M is greater than or equal to N, and when a charge of at least one of the N battery units changes, a total volume change of the N battery units is maintained within a second preset range.

In the above technical solution, by stacking the M battery cells to form N battery units, when the charge of at least one of the N battery units changes, the charge of at least one of the remaining battery units may change accordingly or remain unchanged, so that the total volume change of the N battery units is maintained within the second preset range, which can reduce the probability of hazardous situations and improve the safety of battery use.

In some embodiments, each battery unit includes a plurality of battery cells, and a battery cell of another battery unit is disposed between at least two battery cells of a same battery unit.

In the above technical solution, by configuring the battery assembly such that a battery cell of another battery unit is disposed between at least two battery cells of a same battery unit, the total volume of the N battery units can be adjusted by controlling the charge and discharge states of the two battery cells of the same battery unit and the battery cell of another battery unit disposed between the two battery cells, so that the total volume change of the N battery units is maintained within the second preset range, thereby facilitating an increase in the safety of battery use and reducing the expansion space required to be reserved, which facilitates an increase in the energy density and capacity of the battery.

In some embodiments, each battery unit includes a plurality of battery cells, and the battery cells of the N battery units are alternately stacked in sequence along the first direction, so that a battery cell of each battery unit is adjacent to a battery cell of another battery unit.

In the above technical solution, by sequentially staggering and stacking the battery cells of the N battery units along the first direction, a battery cell of each battery unit can be adjacent to a battery cell of another battery unit. Thus, the total volume of the N battery units can be adjusted by controlling the charge and discharge states of a battery cell of a certain battery unit and a battery cell of another battery unit adjacent thereto, so that the total volume change of the N battery units is maintained within the second preset range, and the expansion space required to be reserved can be reduced, facilitating an increase in the energy density and capacity of the battery.

In some embodiments, the N battery units include: a first battery unit and a second battery unit, the first battery unit and the second battery unit each including a plurality of battery cells, and a battery cell of the second battery unit being disposed between two adjacent battery cells of the first battery unit.

In the above technical solution, when a battery cell of any battery unit expands due to charging, the total volume of the N battery units can be adjusted by controlling a battery cell of another battery unit adjacent to the battery cell expanding due to charging to discharge. Additionally, by disposing a battery cell of the second battery unit between two adjacent battery cells of the first battery unit, the battery cells of the first battery unit and the battery cells of the second battery unit can be alternately stacked in sequence, allowing each battery cell to provide space for the expansion of an adjacent battery cell through discharging, which facilitates further reduction of the expansion space required to be reserved, thereby further increasing the energy density and capacity of the battery.

In some embodiments, the N battery units are sequentially stacked along the first direction, and each battery unit is movable along the first direction.

In the above technical solution, by configuring each battery unit to be movable along the first direction, the probability of hazardous situations such as thermal runaway or explosion due to mutual compression of multiple battery cells can be reduced, facilitating an increase in the safety of battery use.

In some embodiments, each battery unit includes a plurality of battery cells, and the plurality of battery cells of each battery unit are electrically connected.

In the above technical solution, by electrically connecting the plurality of battery cells of each battery unit, synchronous charging and discharging of the plurality of battery cells of the same battery unit can be achieved, thereby reducing the control complexity of the battery assembly and enabling similar usage conditions and lifespans for the plurality of battery cells of the same battery unit, which facilitates reducing the maintenance difficulty of the battery.

In some embodiments, the battery assembly further includes: a control unit, the control unit being connected to each battery unit to control charging and discharging of the battery unit.

In the above technical solution, by connecting the control unit to each battery unit, multiple battery units can be controlled by a single control unit, that is, the charging and discharging of multiple battery units can be controlled by one control unit, resulting in fewer control units in the battery assembly and a high integration level of the control unit.

In some embodiments, the battery assembly further includes: a plurality of control units, the plurality of control units being connected to the N battery units in a one-to-one correspondence, so that each control unit controls charging and discharging of a corresponding battery unit.

In the above technical solution, by connecting the plurality of control units to the N battery units in a one-to-one correspondence, the N battery units can be controlled by multiple control units, which can simplify the structure of the control units, facilitate reducing the production and maintenance difficulty of the control units, and allow quick and accurate identification of a corresponding control unit in case of a control error, thereby improving maintenance efficiency.

In some embodiments, when there is a battery unit undergoing charging among the N battery units, at least one of the N battery units discharges, so that a total volume of the N battery units remains unchanged.

In the above technical solution, when there is a battery unit undergoing charging among the N battery units, by causing at least one of the N battery units to discharge, the total volume of the N battery units can remain unchanged, reducing the probability of hazardous situations due to an increase in the total volume of the N battery units, thereby facilitating an increase in the safety of battery use.

In some embodiments, a charging current of the battery unit undergoing charging is I₁, a discharging current of the battery unit undergoing discharging is I₂, and a relationship I₁ ≤ I₂ is satisfied.

In the above technical solution, by making the charging current of the battery unit undergoing charging less than or equal to the discharging current of the battery unit undergoing discharging, the total volume of the N battery units can remain unchanged or decrease, reducing the probability that the total volume change of the N battery units exceeds the second preset range, thereby facilitating an increase in the safety of battery use.

In some embodiments, a total charge of the battery assembly when fully charged is A, a sum of real-time charges of the N battery units is B, and a relationship B ≤ A is satisfied.

In the above technical solution, by making the sum of the real-time charges of the N battery units less than or equal to the total charge of the battery assembly when fully charged, the probability that the total volume change of the N battery units exceeds the second preset range can be reduced, facilitating an increase in the safety of battery use.

According to a second aspect, an embodiment of the present application further provides a battery including the battery assembly described above.

According to a third aspect, an embodiment of the present application further provides an electric apparatus including the battery described above.

According to a fourth aspect, an embodiment of the present application further provides a control method of a battery assembly, where the battery assembly includes M battery cells, the M battery cells being sequentially stacked along a first direction, where M is an integer greater than 1 and a volume of each battery cell is positively correlated with a remaining charge of the battery cell, the control method including: acquiring charge information of each battery cell; and when it is determined based on the charge information of each battery cell that there is a battery cell with a charge change among the M battery cells, controlling at least one of the other battery cells among the M battery cells to charge or discharge, so that a total volume change of the M battery cells is maintained within a first preset range.

In the above technical solution, when it is determined that there is a battery unit with a charge change among the M battery cells, by controlling at least one of the other battery cells among the M battery cells to charge or discharge, the total volume change of the M battery cells can be maintained within the first preset range, reducing the probability of hazardous situations, thereby improving the safety of battery use and reducing the expansion space required to be reserved in the battery casing, facilitating an increase in the energy density and capacity of the battery.

In some embodiments, the M battery cells are stacked to form N battery units, where N is an integer greater than 1 and M is greater than or equal to N, the control method further including: controlling at least one of the other battery units among the N battery units to charge or discharge when a charge of at least one of the N battery units changes, so that a total volume change of the N battery units is maintained within a second preset range.

In the above technical solution, when it is determined that there is a battery unit with a charge change among the N battery units, by controlling at least one of the other battery units among the N battery units to charge or discharge, the total volume change of the N battery units can be maintained within the second preset range, reducing the probability of hazardous situations, thereby improving the safety of battery use.

In some embodiments, when there is a battery unit with an increasing charge among the N battery units, at least one of the other battery units among the N battery units is controlled to discharge; or
when there is a battery unit with a decreasing charge among the N battery units, at least one of the other battery units among the N battery units is controlled to charge.

In the above technical solution, the total volume change of the N battery units can be maintained within the second preset range, reducing the probability of hazardous situations due to the total volume change of the N battery units exceeding the second preset range, thereby improving the safety of battery use.

In some embodiments, when controlling at least one of the other battery units among the N battery units to discharge, controlling a battery unit with a charge less than or equal to a first preset charge value to discharge is stopped; and when controlling at least one of the other battery units among the N battery units to charge, controlling a battery unit with a charge greater than or equal to a second preset charge value to charge is stopped; where the first preset charge value is less than the second preset charge value.

In the above technical solution, stopping controlling a battery unit to discharge when its charge is less than or equal to the first preset charge value and stopping controlling a battery unit to charge when its charge is greater than or equal to the second preset charge value can provide charge and discharge protection for the battery unit, facilitating an extension of the service life of the battery unit.

In some embodiments, a charging current of the battery unit undergoing charging is I₁, a discharging current of the battery unit undergoing discharging is I₂, and a relationship I₁ ≤ I₂ is satisfied.

In the above technical solution, by making the charging current of the battery unit undergoing charging less than or equal to the discharging current of the battery unit undergoing discharging, the total volume of the N battery units can remain unchanged or decrease, reducing the probability that the total volume change of the N battery units exceeds the second preset range, facilitating an increase in the safety of battery use.

In some embodiments, a total charge of the battery assembly when fully charged is A, a sum of real-time charges of the N battery units is B, and a relationship B ≤ A is satisfied.

In the above technical solution, by making the sum of the real-time charges of the N battery units less than or equal to the total charge of the battery assembly when fully charged, the probability that the total volume change of the N battery units exceeds the second preset range can be reduced, facilitating an increase in the safety of battery use.

Additional aspects and advantages of the present application will be partially provided in the following description, and some will become apparent from the following description or be understood through the practice of the present application.

### BRIEF DESCRIPTION OF DRAWINGS

FIG. 1 shows a schematic structural diagram of a vehicle according to some embodiments of the present application.
FIG. 2 shows a structural exploded view of a battery according to some embodiments of the present application.
FIG. 3 shows a schematic diagram of a battery assembly according to some embodiments of the present application (M battery cells stacked).
FIG. 4 shows a schematic diagram of a battery assembly according to some embodiments of the present application (multiple control units).
FIG. 5 shows a schematic diagram of a battery assembly according to some embodiments of the present application (single control unit).
FIG. 6 shows a schematic diagram of a battery assembly according to some embodiments of the present application (a control unit not shown).
FIG. 7 shows a schematic diagram of a battery assembly according to some embodiments of the present application (three battery units).
FIG. 8 shows a flowchart of a control method according to some embodiments of the present application.

### DESCRIPTION OF EMBODIMENTS

To make the objectives, technical solutions, and advantages of the embodiments of the present application clearer, the technical solutions in the embodiments of the present application will be clearly described below in conjunction with the drawings in the embodiments of the present application. It is apparent that the described embodiments are a part of the embodiments of the present application, rather than all embodiments. Based on the embodiments in the present application, all other embodiments obtained by a person of ordinary skill in the art without creative efforts shall fall within the protection scope of the present application.

Unless otherwise defined, all technical and scientific terms used in the present application have the same meanings as commonly understood by those skilled in the technical field of the present application; the terms used in the specification of the present application are solely for the purpose of describing specific embodiments and are not intended to limit the present application; the terms "including", "having", and any variations thereof in the specification, claims, and the above description of drawings of the present application are intended to cover non-exclusive inclusion. The terms "first," "second," and the like in the specification, claims, or the above description of drawings of the present application are used to distinguish different objects, rather than to describe a specific order or primary-secondary relationship.

Reference to "embodiment" in the present application means that a specific feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments.

In the description of the present application, it should be noted that, unless otherwise explicitly specified and defined, the terms "mounting," "connection," "join," and "attachment" should be understood in a broad sense, for example, as a fixed connection, a detachable connection, or an integral connection; a direct connection, an indirect connection through an intermediary, or an internal communication between two elements. For a person of ordinary skill in the art, the specific meanings of the above terms in the present application can be understood according to specific circumstances.

The term "and/or" in the present application is merely an association relationship describing associated objects, indicating that three relationships may exist, for example, A and/or B may indicate: A alone, both A and B, and B alone. Additionally, the character "/" in the present application generally indicates an "or" relationship between the associated objects.

In the embodiments of the present application, the same reference signs denote the same components, and for brevity, detailed descriptions of the same components are omitted in different embodiments. It should be understood that the thickness, length, width, and other dimensions of various components in the embodiments of the present application shown in the drawings, as well as the overall thickness, length, width, and other dimensions of an integrated device, are merely illustrative and should not constitute any limitation to the present application.

The term "plurality" appearing in the present application refers to two or more (including two).

In the present application, a battery cell may include a lithium-ion secondary battery, a lithium-ion primary battery, a lithium-sulfur battery, a sodium-lithium-ion battery, a sodium-ion battery, or a magnesium-ion battery, and the like, which is not limited in the embodiments of the present application. The battery cell may be in the form of a flat body, a rectangular prism, or other shapes, which is not limited in the embodiments of the present application. Battery cells are generally divided into square battery cells and pouch battery cells according to the packaging method, which is also not limited in the embodiments of the present application.

The battery mentioned in the embodiments of the present application refers to a single physical module including one or more battery cells to provide higher voltage and capacity. For example, the battery mentioned in the present application may include a battery module or a battery pack, and the like. The battery generally includes a casing for encapsulating one or more battery cells or multiple battery modules. The casing can prevent liquids or other foreign objects from affecting the charging or discharging of the battery cells.

A battery cell includes a housing, an electrode assembly, and an electrolyte, where the housing is configured to accommodate the electrode assembly and the electrolyte. The electrode assembly consists of a positive electrode plate, a negative electrode plate, and a separator. The battery cell operates primarily by the movement of metal ions between the positive electrode plate and the negative electrode plate. The positive electrode plate includes a positive electrode current collector and a positive electrode active material layer, where the positive electrode active material layer is coated on a surface of the positive electrode current collector, and the positive electrode current collector not coated with the positive electrode active material layer protrudes from the positive electrode current collector coated with the positive electrode active material layer, serving as a positive electrode tab. Taking a lithium-ion battery as an example, the material of the positive electrode current collector may be aluminum, and the positive electrode active material may be lithium cobalt oxide, lithium iron phosphate, ternary lithium, or lithium manganate, and the like. The negative electrode plate includes a negative electrode current collector and a negative electrode active material layer where the negative electrode active material layer is coated on a surface of the negative electrode current collector, and the negative electrode current collector not coated with the negative electrode active material layer protrudes from the negative electrode current collector coated with the negative electrode active material layer, serving as a negative electrode tab. The material of the negative electrode current collector may be copper, and the negative electrode active material may be carbon or silicon, and the like. To ensure that a large current can pass without fusing, the number of positive electrode tabs is multiple and the positive electrode tabs are stacked together, and the number of negative electrode tabs is multiple and the negative electrode tabs are stacked together.

The material of the separator may be PP (polypropylene, polypropylene) or PE (polyethylene, polyethylene). Additionally, the electrode assembly may be a wound structure or a laminated structure, which is not limited in the embodiments of the present application.

In recent years, new energy vehicles have seen rapid development. In the field of electric vehicles, power batteries, as the power source of electric vehicles, play an irreplaceable and important role. A battery consists of a casing and a plurality of battery cells accommodated within the casing. As a core component of new energy vehicles, the battery has high requirements in terms of both safety and cycle life.

A battery includes a plurality of battery cells, and during charging and discharging, a volume of each battery cell changes with a variation in remaining charge. When arranging battery cells within the battery, if insufficient expansion space is reserved for the battery cells, expansion of multiple battery cells may cause mutual compression, and the expansion of battery cells may exert pressure on end plates, easily leading to hazardous situations and resulting in low safety of battery use. If a large amount of expansion space is reserved for the battery cells, an energy density of the battery may be low, affecting a capacity of the battery.

Based on the above considerations, to address the technical problem that reserving insufficient expansion space for battery cells leads to low safety of battery use, and reserving a large amount of expansion space for battery cells affects the capacity of the battery, the present application provides a battery assembly including: M battery cells, the M battery cells being sequentially stacked along a first direction, where M is an integer greater than 1; a volume of each battery cell being positively correlated with a remaining charge of the battery cell, so that when a charge of at least one of the M battery cells changes, a total volume change of the M battery cells is maintained within a first preset range.

In the battery assembly of this structure, by sequentially stacking the M battery cells, when the charge of at least one of the M battery cells changes, the charge of at least one of the remaining battery cells may change accordingly or remain unchanged, so that the total volume change of the M battery cells is maintained within the first preset range, which can reduce the probability of hazardous situations, improve the safety of battery use, and reduce the expansion space required to be reserved for the battery, thereby facilitating an increase in the energy density and capacity of the battery.

The battery disclosed in the embodiments of the present application may be used, but is not limited to, in electric apparatuses such as vehicles, ships, or aircraft. A power system of the electric apparatus may be composed of the battery disclosed in the present application.

An embodiment of the present application provides an electric apparatus using a battery as a power source, where the electric apparatus may be, but is not limited to, a mobile phone, a tablet, a laptop, an electric toy, an electric tool, an electric bicycle, an electric vehicle, a ship, a spacecraft, and the like. The electric toy may include a stationary or mobile electric toy, such as a gaming console, an electric toy car, an electric toy ship, an electric toy airplane, and the like, and the spacecraft may include an airplane, a rocket, a space shuttle, a spaceship, and the like.

For ease of description, the following embodiments of the present application take an electric apparatus as a vehicle 1000 as an example for illustration.

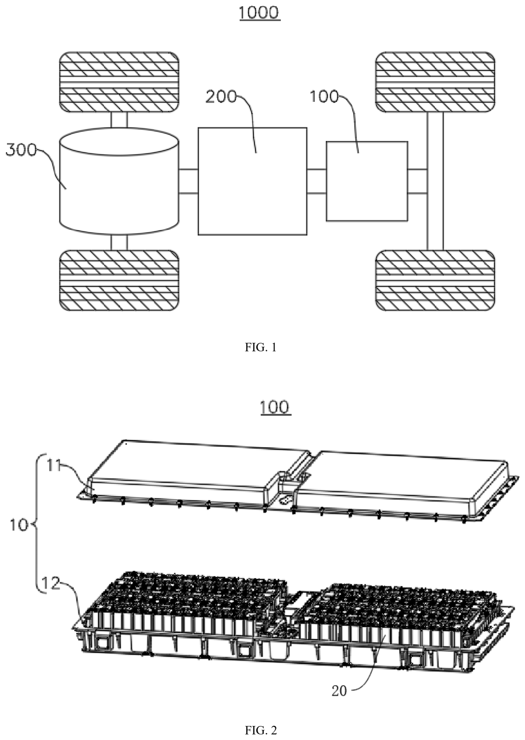

Referring to FIG. 1, FIG. 1 shows a schematic structural diagram of a vehicle 1000 according to some embodiments of the present application. The vehicle 1000 may be a fuel vehicle, a gas vehicle, or a new energy vehicle, and the new energy vehicle may be a pure electric vehicle, a hybrid vehicle, or an extended-range vehicle, and the like. A battery 100 is disposed inside the vehicle 1000, and the battery 100 may be disposed at the bottom, head, or tail of the vehicle 1000. The battery 100 may be configured to supply power to the vehicle 1000, for example, the battery 100 may serve as an operational power source of the vehicle 1000. The vehicle 1000 may further include a controller 200 and a motor 300, where the controller 200 is configured to control the battery 100 to supply power to the motor 300, for example, for the operational power demands of the vehicle 1000 during starting, navigation, and driving.

In some embodiments of the present application, the battery 100 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 shows an exploded view of a battery 100 according to some embodiments of the present application. The battery 100 includes a casing 10 and a plurality of battery cells 20, where the battery cells 20 are configured to be accommodated within the casing 10. The casing 10 is configured to provide an assembly space for the battery cells 20, and the casing 10 may adopt various structures. In some embodiments, the casing 10 may include a first casing portion 11 and a second casing portion 12, where the first casing portion 11 and the second casing portion 12 are mutually covered, and the first casing portion 11 and the second casing portion 12 together define an assembly space for accommodating the battery cells 20. The second casing portion 12 may be a hollow structure with an open end, and the first casing portion 11 may be a plate-like structure, where the first casing portion 11 covers the open side of the second casing portion 12, so that the first casing portion 11 and the second casing portion 12 together define the assembly space; alternatively, both the first casing portion 11 and the second casing portion 12 may be hollow structures with one side open, and the open side of the first casing portion 11 covers the open side of the second casing portion 12. Of course, the casing 10 formed by the first casing portion 11 and the second casing portion 12 may have various shapes, such as a cube, a rectangular prism, and the like.

In the battery 100, the plurality of battery cells 20 may be connected in series, in parallel, or in amixed configuration, where the mixed configuration refers to a combination of both series and parallel connections among the plurality of battery cells 20. The plurality of battery cells 20 may be directly connected in series, in parallel, or in a mixed configuration, and the entirety formed by the plurality of battery cells 20 is accommodated within the casing 10; alternatively, the battery 100 may include a plurality of battery cells 20 first connected in series, in parallel, or in a mixed configuration to form a battery module, and then multiple battery modules are connected in series, in parallel, or in a mixed configuration to form an entirety, which is accommodated within the casing 10. The battery 100 may further include other structures, for example, the battery 100 may further include a busbar component configured to achieve electrical connection between the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be in the form of a flat body, a rectangular prism, or other shapes, and the like.

The battery assembly 30 according to embodiments of the present application is described below with reference to FIG. 2.

As shown in FIG. 2, according to some embodiments of the present application, the battery assembly 30 includes: M battery cells 20, the M battery cells 20 being sequentially stacked along a first direction, where M is an integer greater than 1; where a volume of each battery cell 20 is positively correlated with a remaining charge of the battery cell, so that when a charge of at least one of the M battery cells 20 changes, a total volume change of the M battery cells 20 is maintained within a first preset range.

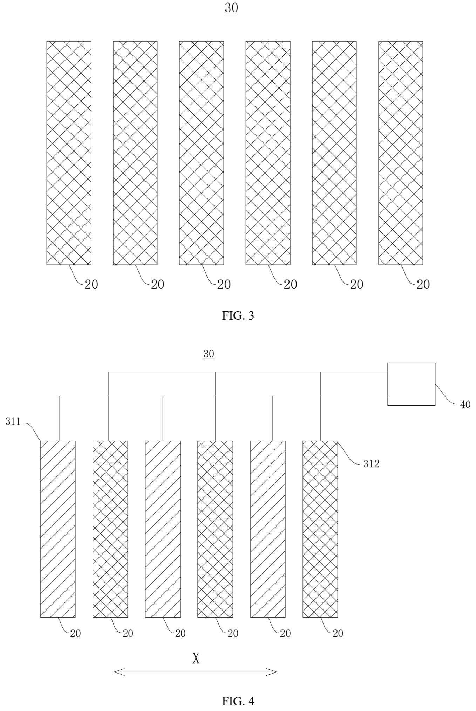

The number of battery cells 20 is M, where M is a positive integer greater than 1, and M may be, but is not limited to, 2, 3, 4, 5, or 6, and the M battery cells 20 are sequentially stacked along the X direction (that is, the first direction) as shown in FIG. 4.

A volume of each battery cell 20 is positively correlated with a remaining charge of the battery cell, so that when a charge of at least one of the M battery cells 20 changes, a total volume change of the M battery cells 20 is maintained within a first preset range. Specifically, during charging, the volume of the battery cell 20 increases, and during discharging, the volume of the battery cell 20 decreases. When a charge of at least one of the M battery cells 20 changes, the charge of at least one of the remaining battery cells 20 may change accordingly so that the total volume change of the M battery cells 20 is maintained within the first preset range, or when a charge of at least one of the M battery cells 20 changes, if the charge change of the at least one battery cell 20 does not cause the total volume change to exceed the first preset range, the charge of the remaining battery cells 20 may remain unchanged.

Specifically, when at least one battery cell 20 is charging, at least one of the remaining battery cells 20 may discharge so that the total volume change of the M battery cells 20 is maintained within the first preset range, or when at least one battery cell 20 is charging, if the charging of the at least one battery cell 20 does not cause the total volume change of the M battery cells 20 to exceed the first preset range, at least one of the remaining battery cells 20 may not perform charging or discharging. Alternatively, when at least one battery cell 20 is charging, if the charging of at least one of the remaining battery cells 20 does not cause the total volume change of the M battery cells 20 to exceed the first preset range, at least one of the remaining battery cells 20 may charge.

When one battery cell 20 is discharging, at least one of the remaining battery cells 20 may charge so that the total volume change of the M battery cells 20 is maintained within the first preset range, or when one battery cell 20 is discharging, at least one of the remaining battery cells 20 may not perform charging or discharging so that the total volume change of the M battery cells 20 is maintained within the first preset range, or when one battery cell 20 is discharging, at least one of the remaining battery cells 20 may discharge so that the total volume change of the M battery cells 20 is maintained within the first preset range.

It should be noted that when a battery cell 20 is charging, the battery cell 20 expands, meaning its volume increases. If the increase in the volume of the battery cell 20 is insufficient to cause the total volume change of the M battery cells 20 to exceed the first preset range, the charge and discharge states of the remaining battery cells 20 may not be considered temporarily. If the increase in the volume of the battery cell 20 is sufficient to cause the total volume change of the M battery cells 20 to exceed the first preset range, at least one of the remaining battery cells 20 needs to discharge, and the volume of the discharging battery cell 20 decreases, thereby maintaining the total volume change of the M battery cells 20 within the first preset range.

It should be noted that the battery cells 20 in the present application are battery cells 20 whose volume is positively correlated with the remaining charge of each battery cell, for example, the battery cells 20 in the present application may be, but are not limited to, lithium-ion batteries, sodium-ion batteries, lithium manganate batteries, and the like. Additionally, the form of the battery cells 20 in the present application may be, but is not limited to, square battery cells, pouch battery cells, and the like.

In the above technical solution, by sequentially stacking the M battery cells 20, when the charge of at least one of the M battery cells 20 changes, the charge of at least one of the remaining battery cells 20 may change accordingly or remain unchanged, so that the total volume change of the M battery cells 20 is maintained within the first preset range, which can reduce the probability of hazardous situations, improve the safety of use of the battery 100, and reduce the expansion space required to be reserved within the casing 10 of the battery 100, thereby facilitating an increase in the energy density and capacity of the battery 100.

In some embodiments of the present application, as shown in FIGs. 4 to 7, the M battery cells 20 are stacked to form N battery units 31, where N is an integer greater than 1, M is greater than or equal to N, and when a charge of at least one of the N battery units 31 changes, a total volume change of the N battery units 31 is maintained within a second preset range.

The M battery cells 20 may be sequentially stacked along the X direction (that is, the first direction) as shown in FIG. 4, and the M battery cells 20 can form N battery units 31, where N is a positive integer greater than 1, and N may be, but is not limited to, 2, 3, 4, 5, or 6, and M is greater than or equal to N. For example, six battery cells 20 may be sequentially stacked along the X direction as shown in FIG. 4 to form two battery units 31, or two battery cells 20 may be stacked along the X direction as shown in FIG. 4 to form two battery units 31.

When a charge of at least one of the N battery units 31 changes, the charge of at least one of the remaining battery units 31 may change accordingly so that the total volume change of the N battery units 31 is maintained within the second preset range, or when a charge of at least one of the N battery units 31 changes, if the charge change of the at least one battery unit 31 does not cause the total volume change to exceed the second preset range, the charge of the remaining battery units 31 may remain unchanged.

Specifically, when at least one battery unit 31 is charging, at least one of the remaining battery units 31 may discharge so that the total volume change of the N battery units 31 is maintained within the second preset range, or when at least one battery unit 31 is charging, if the charging of the at least one battery unit 31 does not cause the total volume change of the N battery units 31 to exceed the second preset range, at least one of the remaining battery units 31 may not perform charging or discharging. Alternatively, when at least one battery unit 31 is charging, if the charging of at least one of the remaining battery units 31 does not cause the total volume change of the N battery units 31 to exceed the second preset range, at least one of the remaining battery units 31 may charge.

When one battery unit 31 is discharging, at least one of the remaining battery units 31 may charge so that the total volume change of the N battery units 31 is maintained within the second preset range, or when one battery unit 31 is discharging, at least one of the remaining battery units 31 may not perform charging or discharging so that the total volume change of the N battery units 31 is maintained within the second preset range, or when one battery unit 31 is discharging, at least one of the remaining battery units 31 may discharge so that the total volume change of the N battery units 31 is maintained within the second preset range.

It should be noted that when a battery unit 31 is charging, the battery cells 20 of the battery unit 31 expand, meaning the volumes of the battery cells 20 of the battery unit 31 increase. If the increase in the volumes of the battery cells 20 is insufficient to cause the total volume change of the N battery units 31 to exceed the second preset range, the charge and discharge states of the remaining battery units 31 may not be considered temporarily. If the increase in the volumes of the battery cells 20 is sufficient to cause the total volume change of the N battery units 31 to exceed the second preset range, at least one of the remaining battery units 31 needs to discharge, and the volumes of the battery cells 20 of the discharging battery unit 31 decrease, thereby maintaining the total volume change of the N battery units 31 within the second preset range. In some optional embodiments of the present application, the battery assembly 30 includes two battery cells 20, and the two battery cells 20 are stacked along the X direction as shown in FIG. 4 to form two battery units 31, that is, each of the two battery units 31 includes one battery cell 20.

In some optional embodiments of the present application, the battery assembly 30 includes six battery cells 20, and the six battery cells 20 are sequentially stacked along the X direction as shown in FIG. 4 to form two battery units 31, where the two battery units 31 are a first battery unit 311 and a second battery unit 312, respectively, the battery cells 20 of the first battery unit 311 are denoted as Q, and the battery cells 20 of the second battery unit 312 are denoted as W

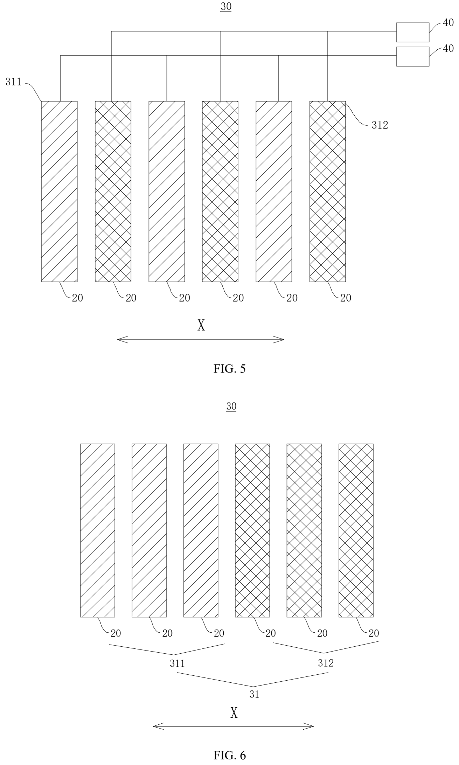

In an optional embodiment of the present application, as shown in FIG. 6, the first battery unit 311 and the second battery unit 312 may each include three battery cells 20, and the first battery unit 311 and the second battery unit 312 may be arranged along the X direction as shown in FIG. 6, that is, the first battery unit 311 is entirely located on one side of the second battery unit 312, and in this case, the arrangement of the six battery cells 20 may be, but is not limited to, "Q, Q, Q, W, W, W"; and "W, W, W, Q, Q, Q".

In an optional embodiment of the present application, the first battery unit 311 and the second battery unit 312 may each include three battery cells 20, and a battery cell 20 of another battery unit 31 is disposed between at least two battery cells 20 of a same battery unit 31. For example, a battery cell 20 of the second battery unit 312 is disposed between at least two battery cells 20 of the first battery unit 311. In this case, the arrangement of the six battery cells 20 may be, but is not limited to, "Q, W, W, Q, W, Q"; "Q, W, Q, W, W, Q". Alternatively, a battery cell 20 of the first battery unit 311 is disposed between at least two battery cells 20 of the second battery unit 312. In this case, the arrangement of the six battery cells 20 may be, but is not limited to, "W, Q, Q, W, Q, W"; "W, Q, W, Q, Q, W". Alternatively, as shown in FIG. 4, a battery cell 20 of the second battery unit 312 is disposed between at least two battery cells 20 of the first battery unit 311, and a battery cell 20 of the first battery unit 311 is disposed between at least two battery cells 20 of the second battery unit 312. In this case, the arrangement of the six battery cells 20 may be, but is not limited to, "W, Q, W, Q, W, Q"; "Q, W, Q, W, Q, W".

In an optional embodiment of the present application, the number of battery cells 20 in the first battery unit 311 and the number of battery cells 20 in the second battery unit 312 may be different, for example, the first battery unit 311 includes four battery cells 20, and the second battery unit 312 includes two battery cells 20. In this case, the arrangement of the first battery unit 311 and the second battery unit 312 may be the same as the arrangements described above. For example, the arrangement of the six battery cells 20 may be, but is not limited to, "Q, Q, Q, Q, W, W"; "W, W, Q, Q, Q, Q".

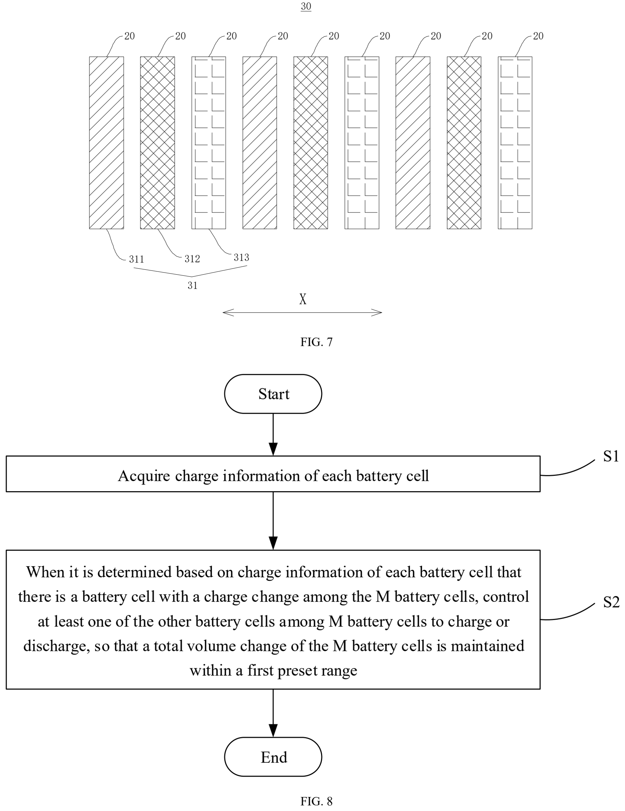

In some optional embodiments of the present application, the battery assembly 30 includes nine battery cells 20, and the nine battery cells 20 are sequentially stacked along the X direction as shown in FIG. 7 to form three battery units 31. The three battery units 31 are a first battery unit 311, a second battery unit 312, and a third battery unit 313, respectively, where the battery cells 20 of the first battery unit 311 are denoted as Q, the battery cells 20 of the second battery unit 312 are denoted as W, and the battery cells 20 of the third battery unit 313 are denoted as E.

In an optional embodiment of the present application, as shown in FIG. 7, the first battery unit 311, the second battery unit 312, and the third battery unit 313 may each include three battery cells 20, and the first battery unit 311, the second battery unit 312, and the third battery unit 313 may be arranged along the X direction as shown in FIG. 7, that is, the first battery unit 311 is entirely located on one side of the second battery unit 312, and the third battery unit 313 is entirely located on another side of the second battery unit 312, and in this case, the arrangement of the nine battery cells 20 may be, but is not limited to, "Q, Q, Q, W, W, W, E, E, E"; "E, E, E, Q, Q, Q, W, W, W".

In an optional embodiment of the present application, the first battery unit 311, the second battery unit 312, and the third battery unit 313 may each include three battery cells 20, and a battery cell 20 of another battery unit 31 is disposed between at least two battery cells 20 of a same battery unit 31. For example, a battery cell 20 of the second battery unit 312 and/or a battery cell 20 of the third battery unit 313 is disposed between at least two battery cells 20 of the first battery unit 311. In this case, the arrangement of the nine battery cells 20 may be, but is not limited to, "Q, W, W, E, Q, E, W, Q"; "Q, E, W, W, Q, W, E, Q". Alternatively, a battery cell 20 of the first battery unit 311 and/or a battery cell 20 of the third battery unit 313 is disposed between at least two battery cells 20 of the second battery unit 312. In this case, the arrangement of the nine battery cells 20 may be, but is not limited to, "W, Q, E, W, Q, Q, E, E, W"; "W, E, Q, W, E, E, Q, Q, W". Alternatively, a battery cell 20 of the first battery unit 311 and/or a battery cell 20 of the second battery unit 312 is disposed between at least two battery cells 20 of the third battery unit 313. In this case, the arrangement of the nine battery cells 20 may be, but is not limited to, "E, Q, Q, W, W, E, Q, W"; "E, W, W, Q, Q, E, W, Q".

Alternatively, a battery cell 20 of the second battery unit 312 and/or a battery cell 20 of the third battery unit 313 is disposed between at least two battery cells 20 of the first battery unit 311, and a battery cell 20 of the first battery unit 311 and/or a battery cell 20 of the third battery unit 313 is disposed between at least two battery cells 20 of the second battery unit 312, and a battery cell 20 of the first battery unit 311 and/or a battery cell 20 of the second battery unit 312 is disposed between at least two battery cells 20 of the third battery unit 313. In this case, the arrangement of the nine battery cells 20 may be, but is not limited to, "W, Q, E, Q, W, E, Q, W, E"; "E, W, Q, E, W, Q, E, W, Q".

In an optional embodiment of the present application, the number of battery cells 20 in the first battery unit 311, the number of battery cells 20 in the second battery unit 312, and the number of battery cells 20 in the third battery unit 313 may be different, for example, the first battery unit 311 includes four battery cells 20, the second battery unit 312 includes three battery cells 20, and the third battery unit 313 includes two battery cells 20. In this case, the arrangement of the first battery unit 311, the second battery unit 312, and the third battery unit 313 may be the same as the arrangements described above, and details are not repeated here.

It should be noted that the arrangements of the M battery cells 20 listed above are merely exemplary and not exhaustive.

In some optional embodiments of the present application, the first preset range and the second preset range may be the same. In some optional embodiments of the present application, the first preset range and the second preset range may be different. The first preset range can be understood as a numerical range with a maximum value, and maintaining the total volume change of the M battery cells 20 within the first preset range can be understood as the total volume change of the M battery cells 20 not exceeding the maximum value of this numerical range.

The second preset range can be understood as a numerical range with a maximum value, and maintaining the total volume change of the N battery units 31 within the second preset range can be understood as the total volume change of the N battery units 31 not exceeding the maximum value of this numerical range.

In the above technical solution, by stacking the M battery cells 20 to form N battery units 31, when the charge of at least one of the N battery units 31 changes, the charge of at least one of the remaining battery units 31 may change accordingly or remain unchanged, so that the total volume change of the N battery units 31 is maintained within the second preset range, which can reduce the probability of hazardous situations and improve the safety of use of the battery 100.

It should be noted that the different line styles of the battery cells 20 shown in FIGs. 4 to 7 are only for distinguishing the battery cells 20 of the first battery unit 311, the battery cells 20 of the second battery unit 312, and the battery cells 20 of the third battery unit 313, and do not indicate that the structures of the battery cells 20 of different battery units 31 are different.

In some embodiments of the present application, as shown in FIGs. 4 to 6, each battery unit 31 includes a plurality of battery cells 20, and a battery cell 20 of another battery unit 31 is disposed between at least two battery cells 20 of a same battery unit 31.

The number of battery units 31 is at least two, and each battery unit 31 includes at least two battery cells 20, where along the first direction (that is, the X direction shown in FIG. 4), a battery cell 20 of another battery unit 31 may be disposed between at least two battery cells 20 of a same battery unit 31, or along the first direction (that is, the X direction shown in FIG. 4), a battery cell 20 of another battery unit 31 may be disposed between every two battery cells 20 of a same battery unit 31.

When a battery cell 20 of another battery unit 31 disposed between two battery cells 20 of a certain battery unit 31 expands due to charging, the two battery cells 20 of the certain battery unit 31 may discharge and contract, so that the total volume change of the N battery units 31 is maintained within the second preset range. When a battery cell 20 of a certain battery unit 31 expands due to charging, a battery cell 20 of another battery unit 31 adjacent to the battery cell 20 may discharge and contract, so that the total volume change of the N battery units 31 is maintained within the second preset range.

In the above technical solution, by configuring the battery assembly 30 into a structure where a battery cell 20 of another battery unit 31 is disposed between at least two battery cells 20 of a same battery unit 31, the total volume of the N battery units 31 can be adjusted by controlling the charge and discharge states of the two battery cells 20 of the same battery unit 31 and the battery cell 20 of another battery unit 31 disposed between the two battery cells 20, so that the total volume change of the N battery units 31 is maintained within the second preset range, thereby facilitating an increase in the safety of use of the battery 100 and reducing the expansion space required to be reserved within the casing 10 of the battery 100, which facilitates an increase in the energy density and capacity of the battery 100.

In some embodiments of the present application, as shown in FIGs. 4 and 5, each battery unit 31 includes a plurality of battery cells 20, and the battery cells 20 of the N battery units 31 are alternately stacked in sequence along the first direction, so that a battery cell 20 of each battery unit 31 is adjacent to a battery cell 20 of another battery unit 31.

The number of battery units 31 is at least two (that is, N), and each battery unit 31 includes at least two battery cells 20, where along the first direction (that is, the X direction shown in FIG. 4), the battery cells 20 of the N battery units 31 are alternately stacked in sequence, and a battery cell 20 of each battery unit 31 is adjacent to a battery cell 20 of another battery unit 31. In other words, each battery cell 20 adjacent to any battery cell 20 of a certain battery unit 31 belongs to another battery unit 31.

When any battery cell 20 of a certain battery unit 31 expands due to charging, a battery cell 20 of another battery unit 31 adjacent to the battery cell 20 may discharge and contract, so that the total volume change of the N battery units 31 is maintained within the second preset range. When a battery cell 20 of another battery unit 31 adjacent to any battery cell 20 of a certain battery unit 31 expands due to charging, the any battery cell 20 of the certain battery unit 31 may discharge and contract, so that the total volume change of the N battery units 31 is maintained within the second preset range.

In the above technical solution, by sequentially staggering and stacking the battery cells 20 of the N battery units 31 along the first direction, a battery cell 20 of each battery unit 31 can be adjacent to a battery cell 20 of another battery unit 31. Thus, the total volume of the N battery units 31 can be adjusted by controlling the charge and discharge states of a battery cell 20 of a certain battery unit 31 and a battery cell 20 of another battery unit 31 adjacent to the battery cell 20 of the certain battery unit 31, so that the total volume change of the N battery units 31 is maintained within the second preset range, and the expansion space required to be reserved within the casing 10 of the battery 100 can be reduced, facilitating an increase in the energy density and capacity of the battery 100.

In some embodiments of the present application, as shown in FIGs. 4 and 5, the N battery units 31 include: a first battery unit 311 and a second battery unit 312, the first battery unit 311 and the second battery unit 312 each including a plurality of battery cells 20, and a battery cell 20 of the second battery unit 312 being disposed between two adjacent battery cells 20 of the first battery unit 311.

The first battery unit 311 may include a plurality of battery cells 20, and the second battery unit 312 may also include a plurality of battery cells 20, where the number of battery cells 20 in the first battery unit 311 and the number of battery cells 20 in the second battery unit 312 may be the same; or the number of battery cells 20 in the first battery unit 311 and the number of battery cells 20 in the second battery unit 312 may be different. For example, the first battery unit 311 may include five battery cells 20, and the second battery unit 312 may include five battery cells 20, or the first battery unit 311 may include five battery cells 20, and the second battery unit 312 may include four battery cells 20.

Additionally, a battery cell 20 of the second battery unit 312 is disposed between every two adjacent battery cells 20 of the first battery unit 311, that is, along the first direction (that is, the X direction shown in FIG. 4), the battery cells 20 of the first battery unit 311 and the battery cells 20 of the second battery unit 312 are alternately stacked in sequence. When a battery cell 20 of the first battery unit 311 expands due to charging, a battery cell 20 of the second battery unit 312 may discharge and contract, so that the total volume change of the N battery units 31 is maintained within the second preset range. When a battery cell 20 of the second battery unit 312 expands due to charging, a battery cell 20 of the first battery unit 311 may discharge and contract, so that the total volume change of the N battery units 31 is maintained within the second preset range.

In the above technical solution, when a battery cell 20 of any battery unit 31 expands due to charging, the total volume of the N battery units 31 can be adjusted by controlling a battery cell 20 of another battery unit 31 adjacent to the battery cell 20 expanding due to charging to discharge. Additionally, by disposing a battery cell 20 of the second battery unit 312 between two adjacent battery cells 20 of the first battery unit 311, the battery cells 20 of the first battery unit 311 and the battery cells 20 of the second battery unit 312 can be alternately stacked in sequence, allowing each battery cell 20 to provide space for the expansion of an adjacent battery cell 20 through discharging, which facilitates further reduction of the expansion space required to be reserved within the casing 10 of the battery 100, thereby further increasing the energy density and capacity of the battery 100.

In some embodiments of the present application, the N battery units 31 are sequentially stacked along the first direction, and each battery unit 31 is movable along the first direction.

Along the X direction (that is, the first direction) as shown in FIG. 4, the N battery units 31 may be sequentially stacked. In an optional embodiment of the present application, one battery unit 31 among the N battery units 31 may be entirely located on one side of another battery unit 31 among the N battery units 31. In an optional embodiment of the present application, the battery cells 20 of one battery unit 31 among the N battery units 31 and the battery cells 20 of another battery unit 31 among the N battery units 31 may be alternately stacked in sequence, for example, a battery cell 20 of another battery unit 31 may be disposed between at least two battery cells 20 of one battery unit 31 among the N battery units 31. Additionally, each battery unit 31 is movable along the X direction (that is, the first direction) as shown in FIG. 4.

It should be noted that when a battery cell 20 of a certain battery unit 31 among the N battery units 31 expands due to charging, the expanding battery cell 20 may contact another battery cell 20 of the same battery unit 31, or the expanding battery cell 20 may contact a battery cell 20 of another battery unit 31. When contact occurs, if the expanding battery cell 20 continues to charge and expand, a compressive force may be generated between the expanding battery cell 20 and the contacted battery cell 20, and the compressive force can push the contacted battery cell 20 to move away, meaning that the two contacted battery cells 20 can be made to move in directions away from each other.

In the above technical solution, by configuring each battery unit 31 to be movable along the first direction, the probability of hazardous situations such as thermal runaway or explosion due to mutual compression of multiple battery cells 20 can be reduced, facilitating an increase in the safety of use of the battery 100.

In some embodiments of the present application, as shown in FIGs. 4 and 5, each battery unit 31 includes a plurality of battery cells 20, and the plurality of battery cells 20 of each battery unit 31 are electrically connected.

The number of battery units 31 may be multiple, and each battery unit 31 may include a plurality of battery cells 20, and the plurality of battery cells 20 of each battery unit 31 may be electrically connected together, meaning that the plurality of battery cells 20 of the same battery unit 31 can achieve synchronous charging and synchronous discharging. In some optional embodiments of the present application, the plurality of battery cells 20 of the same battery unit 31 may be connected in series.

In the above technical solution, by electrically connecting the plurality of battery cells 20 of each battery unit 31, synchronous charging and discharging of the plurality of battery cells 20 of the same battery unit 31 can be achieved, thereby reducing the control complexity of the battery assembly 30 and enabling similar usage conditions and lifespans for the plurality of battery cells 20 of the same battery unit 31, which facilitates reducing the maintenance difficulty of the battery 100.

In some embodiments of the present application, as shown in FIG. 5, the battery assembly further includes: a control unit 40, the control unit 40 being connected to each battery unit 31 to control charging and discharging of the battery unit 31.

The number of battery units 31 may be multiple, and each battery unit 31 may include a plurality of battery cells 20, and the control unit 40 may be connected to multiple battery units 31. In some optional embodiments of the present application, the control unit 40 may be electrically connected to multiple battery units 31, and in some optional embodiments of the present application, the control unit 40 may be communicatively connected to multiple battery units 31. The control unit 40 can control charging or discharging of any one of the multiple battery units 31 connected thereto. For example, the number of battery units 31 may be two, the two battery units 31 may be a first battery unit 311 and a second battery unit 312, the control unit 40 is connected to both the first battery unit 311 and the second battery unit 312, and the control unit 40 can control charging or discharging of the first battery unit 311, and the control unit 40 can also control charging or discharging of the second battery unit 312.

In the above technical solution, by connecting the control unit 40 to each battery unit 31, multiple battery units 31 can be controlled by a single control unit 40, that is, the charging and discharging of multiple battery units 31 can be controlled by one control unit 40, resulting in fewer control units 40 in the battery assembly 30 and a high integration level of the control unit 40.

In some embodiments of the present application, as shown in FIG. 4, the battery assembly further includes: a plurality of control units 40, the plurality of control units 40 being connected to the N battery units 31 in a one-to-one correspondence, so that each control unit 40 controls charging and discharging of a corresponding battery unit 31.

The number of control units 40 may be multiple, and in some optional embodiments of the present application, the number of control units 40 may be the same as the number of battery units 31, and the plurality of control units 40 may be connected to the plurality of battery units 31 in a one-to-one correspondence, where each control unit 40 can control charging and discharging of the battery unit 31 connected thereto. For example, the number of battery units 31 may be two, the two battery units 31 may be a first battery unit 311 and a second battery unit 312, the number of control units 40 may be two, where one control unit 40 may be connected to the first battery unit 311 to control charging and discharging of the first battery unit 311, and another control unit 40 may be connected to the second battery unit 312 to control charging and discharging of the second battery unit 312.

In some optional embodiments of the present application, the control unit 40 may be electrically connected to the battery unit 31, and in some optional embodiments of the present application, the control unit 40 may be communicatively connected to the battery unit 31.

In the above technical solution, by connecting the plurality of control units 40 to the N battery units 31 in a one-to-one correspondence, the N battery units 31 can be controlled by multiple control units 40, which can simplify the structure of the control units 40, facilitate reducing the production and maintenance difficulty of the control units 40, and allow quick and accurate identification of a corresponding control unit 40 in case of a control error, thereby improving maintenance efficiency.

In some embodiments of the present application, when there is a battery unit 31 undergoing charging among the N battery units 31, at least one of the N battery units 31 discharges, so that a total volume of the N battery units 31 remains unchanged.

The volume of a battery unit 31 expands during charging and decreases during discharging. If there is a battery unit 31 undergoing charging among the N battery units 31, by causing at least one of the N battery units 31 to discharge, the expansion rate and the contraction rate of the total volume of the N battery units 31 can be made consistent, thereby keeping the total volume of the N battery units 31 unchanged.

In some optional embodiments of the present application, when there is a battery unit 31 undergoing charging among the N battery units 31, one battery unit 31 among the N battery units 31 may be caused to discharge, or multiple battery units 31 among the N battery units 31 may be caused to discharge, and by calculating and controlling the charging rate and discharging rate, the total volume of the N battery units 31 can be kept unchanged.

In the above technical solution, when there is a battery unit 31 undergoing charging among the N battery units 31, by causing at least one of the N battery units 31 to discharge, the total volume of the N battery units 31 can remain unchanged, reducing the probability of hazardous situations due to an increase in the total volume of the N battery units 31, thereby facilitating an increase in the safety of use of the battery 100.

In some embodiments of the present application, a charging current of the battery unit 31 undergoing charging is I₁, a discharging current of the battery unit 31 undergoing discharging is I₂, and a relationship I₁ ≤ I₂ is satisfied.

When there is a battery unit 31 undergoing charging and a battery unit 31 undergoing discharging among the N battery units 31, the charging current I₁ of the battery unit 31 undergoing charging may be equal to the discharging current I₂ of the battery unit 31 undergoing discharging, or the charging current I₁ of the battery unit 31 undergoing charging may be less than the discharging current I₂ of the battery unit 31 undergoing discharging.

It should be noted that I₁ refers to the charging current of all battery units 31 undergoing charging at the same moment. For example, if one battery unit 31 is undergoing charging at this moment, the charging current of that battery unit 31 is I₁; if multiple battery units 31 are undergoing charging at this moment, the total charging current of the multiple battery units 31 is I₁. Similarly, I₂ refers to the discharging current of all battery units 31 undergoing discharging at the same moment. For example, if one battery unit 31 is undergoing discharging at this moment, the discharging current of that battery unit 31 is I₂; if multiple battery units 31 are undergoing discharging at this moment, the total discharging current of the multiple battery units 31 is I₂.

A volume of each battery cell 20 is positively correlated with a remaining charge of the battery cell. By making I₁ ≤ I₂, the total volume of the N battery units 31 can remain unchanged or decrease. Specifically, if I₁ equals I₂, the total volume of the N battery units 31 can remain unchanged; if I₁ is less than I₂, the total volume of the N battery units 31 can decrease.

In the above technical solution, by making the charging current of the battery units 31 undergoing charging less than or equal to the discharging current of the battery units 31 undergoing discharging, the total volume of the N battery units 31 can remain unchanged or decrease, reducing the probability that the total volume change of the N battery units 31 exceeds the second preset range, facilitating an increase in the safety of use of the battery 100.

In some embodiments of the present application, a total charge of the battery assembly 30 when fully charged is A, a sum of real-time charges of the N battery units 31 is B, and a relationship B ≤ A is satisfied.

The sum of the real-time charges of the N battery units 31 may be equal to the total charge of the battery assembly 30 when fully charged, or the sum of the real-time charges of the N battery units 31 may be less than the total charge of the battery assembly 30 when fully charged. It should be noted that a volume of each battery cell 20 is positively correlated with a remaining charge of the battery cell. By making A and B satisfy the relationship B ≤ A, the total volume of the N battery units 31 can be ensured to be no greater than the total volume of the battery assembly 30 when fully charged at any time.

In the above technical solution, by making the sum of the real-time charges of the N battery units 31 less than or equal to the total charge of the battery assembly 30 when fully charged, the probability that the total volume change of the N battery units 31 exceeds the second preset range can be reduced, facilitating an increase in the safety of use of the battery 100.

In some embodiments of the present application, the present application further provides a battery 100, where the battery 100 includes the battery assembly 30 described above.

In some embodiments of the present application, the present application further provides an electric apparatus, where the electric apparatus includes the battery 100 described above, and the battery 100 is configured to provide electrical energy to the electric apparatus.

The electric apparatus may be any device or system that uses the battery 100 described above.

In some embodiments of the present application, as shown in FIG. 4, the present application provides a battery assembly 30, where the battery assembly 30 includes M battery cells 20, the M battery cells 20 being sequentially stacked along a first direction to form N battery units 31, where M and N are both integers greater than 1, and M is greater than or equal to N, a volume of each battery cell 20 being positively correlated with a remaining charge of the battery cell, so that when a charge of at least one of the N battery units 31 changes, a total volume change of the N battery units 31 is maintained within a second preset range.

The N battery units 31 include: a first battery unit 311 and a second battery unit 312, where the first battery unit 311 may include a plurality of battery cells 20, and the second battery unit 312 may also include a plurality of battery cells 20, and the number of battery cells 20 in the first battery unit 311 is the same as the number of battery cells 20 in the second battery unit 312.

The plurality of battery cells 20 of the first battery unit 311 are electrically connected together, and the plurality of battery cells 20 of the second battery unit 312 are electrically connected together. Both the first battery unit 311 and the second battery unit 312 are movable along the first direction. Additionally, a battery cell 20 of the second battery unit 312 is disposed between every two adjacent battery cells 20 of the first battery unit 311, that is, along the first direction (that is, the X direction shown in FIG. 4), the battery cells 20 of the first battery unit 311 and the battery cells 20 of the second battery unit 312 are alternately stacked in sequence. When a battery cell 20 of the first battery unit 311 expands due to charging, a battery cell 20 of the second battery unit 312 may discharge and contract, so that the total volume change of the N battery units 31 is maintained within the second preset range. When a battery cell 20 of the second battery unit 312 expands due to charging, a battery cell 20 of the first battery unit 311 may discharge and contract, so that the total volume change of the N battery units 31 is maintained within the second preset range.

The battery assembly 30 further includes two control units 40, where one control unit 40 may be connected to the first battery unit 311 to control charging and discharging of the first battery unit 311, and another control unit 40 may be connected to the second battery unit 312 to control charging and discharging of the second battery unit 312. Moreover, a sum of real-time charges of the first battery unit 311 and the second battery unit 312 is less than or equal to a total charge of the battery assembly 30 when fully charged.

By stacking the M battery cells 20 to form N battery units 31, when the charge of at least one of the N battery units 31 changes, the charge of at least one of the remaining battery units 31 may change accordingly or remain unchanged, so that the total volume change of the N battery units 31 is maintained within the second preset range, which can reduce the probability of hazardous situations, improve the safety of use of the battery 100, and reduce the expansion space required to be reserved within the casing 10 of the battery 100, facilitating an increase in the energy density and capacity of the battery 100.

A control method of a battery assembly according to an embodiment of the present application is described below with reference to FIG. 8.

FIG. 8 shows a flowchart of a control method according to some embodiments of the present application, where the battery assembly includes M battery cells, the M battery cells being sequentially stacked along a first direction, where M is an integer greater than 1 and a volume of each battery cell is positively correlated with a remaining charge of the battery cell, the control method including: acquiring charge information of each battery cell; and when it is determined based on the charge information of each battery cell that there is a battery cell with a charge change among the M battery cells, controlling at least one of the other battery cells among the M battery cells to charge or discharge, so that a total volume change of the M battery cells is maintained within a first preset range.

The number of battery cells is M, where M is a positive integer greater than 1, and M may be, but is not limited to, 2, 3, 4, 5, or 6, and the M battery cells are sequentially stacked along the X direction (that is, the first direction) as shown in FIG. 4. A volume of each battery cell is positively correlated with a remaining charge of the battery cell, specifically, during charging, the volume of the battery cell increases, and during discharging, the volume of the battery cell decreases.

The control method includes the following steps:
S1. Acquire charge information of each battery cell.
S2. When it is determined based on the charge information of each battery cell that there is a battery cell with a charge change among the M battery cells, control at least one of the other battery cells among the M battery cells to charge or discharge, so that a total volume change of the M battery cells is maintained within a first preset range.

When it is determined based on the charge information of each battery cell that there is a battery cell with a charge change among the M battery cells (that is, when there is a battery cell undergoing charging or discharging among the M battery cells), by controlling at least one of the other battery cells among the M battery cells to charge or discharge correspondingly, the total volume change of the M battery cells can be maintained within the first preset range.

Specifically, when it is determined based on the charge information of each battery cell that there is a battery cell with an increasing charge among the M battery cells, by controlling one or more of the other battery cells among the M battery cells to discharge, the total volume change of the M battery cells can be maintained within the first preset range.

In some optional embodiments of the present application, when it is determined based on the charge information of each battery cell that there is a battery cell with a decreasing charge among the M battery cells, by controlling one or more of the other battery cells among the M battery cells to charge, the total volume change of the M battery cells can be maintained within the first preset range.

In the above technical solution, when it is determined that there is a battery cell with a charge change among the M battery cells, by controlling at least one of the other battery cells among the M battery cells to charge or discharge, the total volume change of the M battery cells can be maintained within the first preset range, reducing the probability of hazardous situations, thereby improving the safety of battery use and reducing the expansion space required to be reserved in the battery casing, facilitating an increase in the energy density and capacity of the battery.

In some embodiments of the present application, the M battery cells are stacked to form N battery units, where N is an integer greater than 1 and M is greater than or equal to N, the control method further including: controlling at least one of the other battery units among the N battery units to charge or discharge when a charge of at least one of the N battery units changes, so that a total volume change of the N battery units is maintained within a second preset range.

The M battery cells can be sequentially stacked along the X direction (that is, the first direction) as shown in FIG. 4, and the M battery cells can form N battery units, where N is a positive integer greater than 1, and N may be, but is not limited to, 2, 3, or 4, and M is greater than or equal to N. For example, six battery cells may be sequentially stacked along the X direction as shown in FIG. 4 to form two battery units, or two battery cells may be stacked along the X direction as shown in FIG. 4 to form two battery units.

Charge information of each battery unit can be acquired through a control unit. When it is determined based on the charge information of each battery unit that there is a battery unit with a charge change among the N battery units (that is, when there is a battery unit undergoing charging or discharging among the N battery units), by controlling at least one of the other battery units among the N battery units to charge or discharge correspondingly, the total volume change of the N battery units can be maintained within the second preset range.

Specifically, when it is determined based on the charge information of each battery unit that there is a battery unit with an increasing charge among the N battery units, by controlling one or more of the other battery units among the N battery units to discharge, the total volume change of the N battery units can be maintained within the second preset range.

In some optional embodiments of the present application, when it is determined based on the charge information of each battery unit that there is a battery unit with a decreasing charge among the N battery units, by controlling one or more of the other battery units among the N battery units to charge, the total volume change of the N battery units can be maintained within the second preset range.

In some optional embodiments of the present application, the first preset range and the second preset range may be the same. In some optional embodiments of the present application, the first preset range and the second preset range may be different. The first preset range can be understood as a numerical range with a maximum value, and maintaining the total volume change of the M battery cells within the first preset range can be understood as the total volume change of the M battery cells not exceeding the maximum value of this numerical range.

The second preset range can be understood as a numerical range with a maximum value, and maintaining the total volume change of the N battery units within the second preset range can be understood as the total volume change of the N battery units not exceeding the maximum value of this numerical range.

In the above technical solution, when it is determined that there is a battery unit with a charge change among the N battery units, by controlling at least one of the other battery units among the N battery units to charge or discharge, the total volume change of the N battery units can be maintained within the second preset range, reducing the probability of hazardous situations, thereby improving the safety of battery use.

In some embodiments of the present application, when there is a battery unit with an increasing charge among the N battery units, at least one of the other battery units among the N battery units is controlled to discharge; or when there is a battery unit with a decreasing charge among the N battery units, at least one of the other battery units among the N battery units is controlled to charge.

The volume of a battery unit expands during charging and decreases during discharging. If there is a battery unit with a charge change among the N battery units, by causing the charge of at least one of the N battery units to change accordingly, the total volume change of the N battery units can be maintained within the second preset range.

Specifically, when there is a battery unit with an increasing charge among the N battery units, one of the other battery units among the N battery units can be controlled to discharge, or multiple other battery units among the N battery units can be controlled to discharge, so that the total volume change of the N battery units is maintained within the second preset range.

When there is a battery unit with a decreasing charge among the N battery units, one of the other battery units among the N battery units can be controlled to charge, or multiple other battery units among the N battery units can be controlled to charge, so that the total volume change of the N battery units is maintained within the second preset range.

In the above technical solution, the total volume change of the N battery units can be maintained within the second preset range, reducing the probability of hazardous situations due to the total volume change of the N battery units exceeding the second preset range, thereby improving the safety of battery use.

In some embodiments of the present application, when controlling at least one of the other battery units among the N battery units to discharge, controlling a battery unit with a charge less than or equal to a first preset charge value to discharge is stopped; when controlling at least one of the other battery units among the N battery units to charge, controlling a battery unit with a charge greater than or equal to a second preset charge value to charge is stopped; where the first preset charge value is less than the second preset charge value.

When at least one of the other battery units among the N battery units is being controlled to discharge, the real-time charge of the battery unit being controlled to discharge can be monitored, and when the charge of the battery unit being controlled to discharge is discharged to less than or equal to the first preset charge value, controlling for that battery unit to discharge can be stopped.

When at least one of the other battery units among the N battery units is being controlled to charge, the real-time charge of the battery unit being controlled to charge can be monitored, and when the charge of the battery unit being controlled to charge is charged to greater than or equal to the second preset charge value, controlling for that battery unit to charge can be stopped. The first preset charge value is less than the second preset charge value.

In some optional embodiments of the present application, the first preset charge value may be, but is not limited to, 4%, 5%, or 6% of the rated charge of the battery unit, and the second preset charge value may be, but is not limited to, 94%, 95%, or 96% of the rated charge of the battery unit. Additionally, the rated charges of multiple battery units may be the same, or the rated charges of multiple battery units may be different.

In the above technical solution, stopping discharge of a battery unit when its charge is less than or equal to the first preset charge value and stopping charge of a battery unit when its charge is greater than or equal to the second preset charge value can provide charge and discharge protection for the battery unit, facilitating an extension of the service life of the battery unit.

In some embodiments of the present application, a charging current of the battery unit undergoing charging is I₁, a discharging current of the battery unit undergoing discharging is I₂, and a relationship I₁ ≤ I₂ is satisfied.

When there is a battery unit undergoing charging and a battery unit undergoing discharging among the N battery units, the charging current I₁ of the battery unit undergoing charging may be equal to the discharging current I₂ of the battery unit undergoing discharging, or the charging current I₁ of the battery unit undergoing charging may be less than the discharging current I₂ of the battery unit undergoing discharging.

It should be noted that I₁ refers to the charging current of all battery units undergoing charging at the same moment. For example, if one battery unit is undergoing charging at this moment, the charging current of that battery unit is I₁; if multiple battery units are undergoing charging at this moment, the total charging current of the multiple battery units is I₁. Similarly, I₂ refers to the discharging current of all battery units undergoing discharging at the same moment. For example, if one battery unit is undergoing discharging at this moment, the discharging current of that battery unit is I₂; if multiple battery units are undergoing discharging at this moment, the total discharging current of the multiple battery units is I₂.

The volume of each battery cell is positively correlated with the remaining charge of the battery cell. By making I₁ ≤ I₂, the total volume of the N battery units can remain unchanged or decrease. Specifically, if I₁ equals I₂, the total volume of the N battery units can remain unchanged; if I₁ is less than I₂, the total volume of the N battery units can decrease.

In the above technical solution, by making the charging current of the battery unit undergoing charging less than or equal to the discharging current of the battery unit undergoing discharging, the total volume of the N battery units can remain unchanged or decrease, reducing the probability that the total volume change of the N battery units exceeds the second preset range, facilitating an increase in the safety of battery use.

In some embodiments of the present application, a total charge of the battery assembly when fully charged is A, a sum of real-time charges of the N battery units is B, and a relationship B ≤ A is satisfied.

The sum of the real-time charges of the N battery units may be equal to the total charge of the battery assembly when fully charged, or the sum of the real-time charges of the N battery units may be less than the total charge of the battery assembly when fully charged. It should be noted that the volume of each battery cell is positively correlated with the remaining charge of the battery cell. By making A and B satisfy the relationship B ≤ A, the total volume of the N battery units can be ensured to be no greater than the total volume of the battery assembly when fully charged at any time.

In the above technical solution, by making the sum of the real-time charges of the N battery units less than or equal to the total charge of the battery assembly when fully charged, the probability that the total volume change of the N battery units exceeds the second preset range can be reduced, facilitating an increase in the safety of battery use.

It should be noted that, without conflict, the embodiments and features in the embodiments of the present application can be combined with each other.

The above are merely optional embodiments of the present application and are not intended to limit the present application. For those skilled in the art, various modifications and variations can be made to the present application. Any modifications, equivalent substitutions, improvements, and the like, made within the spirit and principles of the present application shall be included within the protection scope of the present application.

## Claims

1. A battery assembly, comprising:
M battery cells, the M battery cells being sequentially stacked along a first direction, wherein M is an integer greater than 1;
wherein a volume of each battery cell is positively correlated with a remaining charge of the battery cell, so that when a charge of at least one of the M battery cells changes, a total volume change of the M battery cells is maintained within a first preset range.

2. The battery assembly according to claim 1, wherein the M battery cells are stacked to form N battery units, wherein N is an integer greater than 1, M is greater than or equal to N, and when a charge of at least one of the N battery units changes, a total volume change of the N battery units is maintained within a second preset range.

3. The battery assembly according to claim 2, wherein each battery unit comprises a plurality of battery cells, and a battery cell of another battery unit is disposed between at least two battery cells of a same battery unit.

4. The battery assembly according to claim 2, wherein each battery unit comprises a plurality of battery cells, and the battery cells of the N battery units are alternately stacked in sequence along the first direction, so that a battery cell of each battery unit is adjacent to a battery cell of another battery unit.

5. The battery assembly according to any one of claims 2 to 4, wherein the N battery units comprise: a first battery unit and a second battery unit, the first battery unit and the second battery unit each comprising a plurality of battery cells, and a battery cell of the second battery unit being disposed between two adjacent battery cells of the first battery unit.

6. The battery assembly according to claim 2, wherein the N battery units are sequentially stacked along the first direction, and each battery unit is movable along the first direction.

7. The battery assembly according to any one of claims 2 to 6, wherein each battery unit comprises a plurality of battery cells, and the plurality of battery cells of each battery unit are electrically connected.

8. The battery assembly according to any one of claims 2 to 7, wherein the battery assembly further comprises: a control unit, the control unit being connected to each battery unit to control charging and discharging of the battery unit.

9. The battery assembly according to any one of claims 2 to 7, wherein the battery assembly further comprises: a plurality of control units, the plurality of control units being connected to the N battery units in a one-to-one correspondence, so that each control unit controls charging and discharging of a corresponding battery unit.

10. The battery assembly according to any one of claims 2 to 9, wherein when there is a battery unit undergoing charging among the N battery units, at least one of the N battery units discharges, so that a total volume of the N battery units remains unchanged.

11. The battery assembly according to claim 10, wherein a charging current of the battery unit undergoing charging is I₁, a discharging current of the battery unit undergoing discharging is I₂, and a relationship I₁ ≤ I₂ is satisfied.

12. The battery assembly according to claim 10, wherein a total charge of the battery assembly when fully charged isA, a sum of real-time charges of the N battery units is B, and a relationship B ≤ A is satisfied.

13. A battery, comprising the battery assembly according to any one of claims 1 to 12.

14. An electric apparatus, comprising the battery according to claim 13.

15. A control method of a battery assembly, wherein the battery assembly comprises M battery cells, the M battery cells being sequentially stacked along a first direction, wherein M is an integer greater than 1 and a volume of each battery cell is positively correlated with a remaining charge of the battery cell; and the control method comprises:
acquiring charge information of each battery cell; and
when it is determined based on the charge information of each battery cell that there is a battery cell with a charge change among the M battery cells, controlling at least one of the other battery cells among the M battery cells to charge or discharge, so that a total volume change of the M battery cells is maintained within a first preset range.

16. The control method of the battery assembly according to claim 15, wherein the M battery cells are stacked to form N battery units, wherein N is an integer greater than 1 and M is greater than or equal to N; and the control method further comprises:
controlling at least one of the other battery units among the N battery units to charge or discharge when a charge of at least one of the N battery units changes, so that a total volume change of the N battery units is maintained within a second preset range.

17. The control method of the battery assembly according to claim 16, wherein
when there is a battery unit with an increasing charge among the N battery units, at least one of the other battery units among the N battery units is controlled to discharge; or
when there is a battery unit with a decreasing charge among the N battery units, at least one of the other battery units among the N battery units is controlled to charge.

18. The control method of the battery assembly according to claim 17, wherein
when controlling at least one of the other battery units among the N battery units to discharge, controlling a battery unit with a charge less than or equal to a first preset charge value to discharge is stopped; and
when controlling at least one of the other battery units among the N battery units to charge, controlling a battery unit with a charge greater than or equal to a second preset charge value to charge is stopped;
wherein the first preset charge value is less than the second preset charge value.

19. The control method of the battery assembly according to claim 17, wherein a charging current of the battery unit undergoing charging is I₁, a discharging current of the battery unit undergoing discharging is I₂, and a relationship I₁ ≤ I₂ is satisfied.

20. The control method of the battery assembly according to any one of claims 16 to 19, wherein a total charge of the battery assembly when fully charged is A, a sum of real-time charges of the N battery units is B, and a relationship B ≤ A is satisfied.
